# EUROPEAN PATENT SPECIFICATION

(11) **EP 2 487 439 B1**
(45) Date of publication and mention of the grant of the patent: **08.05.2019**
(21) Application number: 11154391.4
(22) Date of filing: 14.02.2011
(51) Int. Cl.: F25J 3/04, F23K 3/02, F23L 7/00

(54) **Method and system for milling a fuel for an oxy-fuel combustion burner**
Verfahren und System zum Mahlen eines Brennstoffes für einen Brenner zur Sauerstoff-Brennstoff-Verbrennung
Procédé et système pour broyer un combustible pour un brûleur à combustion d'oxycarburants

(43) Date of publication of application: 15.08.2012
(73) Proprietor: General Electric Technology GmbH, 5400 Baden (CH)
(72) Inventor: Heinz, Gerhard, 73732 Esslingen (DE); Brueggemann, Hellmuth, 73732 Esslingen (DE); Kendel, Friedemann, 70563 Stuttgart (DE); Rauchfuss, Hardy, 5244 Birrhard Aargau (CH); Wild, Thomas, 70329 Stuttgart (DE); Moenckert, Patrick, 71726 Benningen (DE); Kaefer, Gisbert, 5413 Birmenstorf (CH); Jönsson, Staffan, 5610 Wohlen (CH); Bialkowski, Michal, 5417 Untersiggenthal (CH); Pekdemir, Turgay, 5200 Brugg Aargau (CH)
(74) Representative: General Electric Technology GmbH

(56) References cited:
- EP-A1- 1 956 293
- EP-A2- 0 092 856
- WO-A1-2008/051798
- JP-A- 59 024 115
- US-A- 4 518 123
- US-A1- 2009 178 408
- MUELLER R ET AL: "KOMBI-KRAFTWERK MIT KOHLEVERGASUNG", VGB KRAFTWERKSTECHNIK, VGB KRAFTWERKSTECHNIK GMBH. ESSEN, DE, vol. 72, no. 5, 1 May 1992 (1992-05-01), pages 413-419, XP000268390, ISSN: 0372-5715

## Description

### Technical Field

The present disclosure relates to a method and a system for milling a fuel for an oxy-fuel combustion burner. The present disclosure also relates to an oxy-fuel combustion power plant comprising such a system.

### Background

Most of the energy used in the world today is derived from the combustion of carbon and hydrogen containing fuels such as coal, oil and natural gas, as well as other organic fuels. Such combustion generates flue gases containing high levels of carbon dioxide. Due to the concerns about global warming, there is an increasing demand for the reduction of emissions of carbon dioxide to the atmosphere, why methods have been developed to remove the carbon dioxide from flue gases before the gas is released to the atmosphere.

In order to reduce the amount of flue gas, and thus the dimensions of a power plant and its gas cleaning arrangements, as well as to facilitate the purification and removal of carbon dioxide, oxygen may be used instead of air in a combustion furnace, so called oxy-fuel combustion, generating a flue gas with a high carbon dioxide concentration and a low nitrogen concentration. The oxygen may be obtained from separating air into an oxygen stream and a nitrogen stream by means of an air separation unit (ASU).

The fuel for oxy-fuel combustion, such as coal, may be milled to a powder prior to entry into the furnace in order to improve the combustion.

JP 59-024115 A2 discloses separation of air into nitrogen enriched air and oxygen enriched air by means of an oxygen permeable membrane, after which coal is pulverised under the nitrogen enriched air and the pulverised coal is burned with the oxygen enriched air.

US 2009/178408 discloses a process for integration of a cryogenic air separation plant and an oxy-combustion power plant. Oxygen rich steam produced in the cryogenic air separation plant is used for the combustion of fuel and nitrogen rich steam produced in the cryogenic air separation plant is heated and used for energy recovery.

EP 1 956 293 discloses a method and apparatus for disposing exhaust gas in a combustion equipment comprising an air separation unit separating the air into oxygen rich gas and othe nitrogen-prevailing gas. Flue formed during combustion of coal is recycled and used to dry and convey the ingoing coal to be combusted.

EP 0 092 856 discloses a process for the gasification of a solid- carbon-containing fuel. coal is ground, dried and subsequently subjected to a partial combustion with oxygen or oxygen-enriched air, the oxygen having been obtained from an air separation plant. Hot synthesis gas produced by the partial combustion is first cooled to 100-500 °C and then further cooled to 25 to 250 ° C by means of indirect heat exchange with a nitrogen-rich gas stream obtained in the air separation plant. Preferably, the heated nitrogen-rich gas stream and steam from a boiler are used to dry the coal.

### Summary

According to an aspect of the present disclosure, there is provided a method of milling a fuel for an oxy-fuel combustion burner, the method comprising the steps of claim 1.

According to another aspect of the present disclosure, there is provided a system according to claim 6.

According to another aspect of the present disclosure, there is provided an oxy-fuel combustion power plant comprising the system of the above aspect.

Discussions above and below relating to any one of the respective aspects of the present disclosure are also, in applicable parts, relevant to any of the other aspects.

By obtaining a hot nitrogen gas stream having a high temperature and leading it to the fuel mill, the fuel may be milled under an atmosphere of the hot nitrogen gas stream. Thus, the hot gas stream acts to dry the fuel, while also providing an inert environment which reduces the risk of dust explosions during milling/pulverizing the fuel. It may be desirable to dry the fuel prior to burning it in order to increase the energy efficiency of the burner and reduce the amount of water vapour contaminating and increasing the volume of the flue gas. Before reaching the mill, the nitrogen gas stream may have been expanded and its temperature may have been reduced, but may still be high enough to at least partially dry the fuel in the mill. By obtaining a nitrogen gas stream from the ASU with a high enough temperature, it may not be necessary to heat the nitrogen gas stream by means of an additional heat exchanger, externally of the ASU, before said gas stream is used for drying the fuel.

At least a major part of the nitrogen gas stream is removed from the fuel before the fuel reaches the burner, in order to reduce the amount of nitrogen in the flue gas, thereby reducing the flue gas volume.

### Brief Description of the Drawings

Currently preferred embodiments will below be discussed with reference to the drawings, in which:
Fig 1 is a schematic diagram of an embodiment of a power plant comprising a system in accordance with the present disclosure.
Fig 2 is a schematic diagram of an embodiment of an air separation unit that may be comprised in a system in accordance with the present disclosure.
Fig 3 is a schematic process chart of an embodiment of a method in accordance with the present disclosure.

### Detailed Description of Exemplary Embodiments

The system and power plant of the present disclosure comprises piping that connects their different parts and is arranged to allow respective fluids and solid materials to flow or be transported through the system/power plant as needed. The piping may comprise conduits, valves, pumps, conveyors, compressors, fans, expanders, nozzles, heat exchangers etc. as appropriate to control the flow/transportation and properties of respective fluids and solids.

The hot nitrogen gas stream has a temperature of at least 150°C, at least 200°C, at least 220°C or at least 240°C, e.g. between 200°C and 300°C, between 220°C and 280°C or between 240°C and 260°C, or about 250°C. This high temperature may be obtained between the separation of the nitrogen stream from the air and of said nitrogen stream entering the fuel mill, such as when leaving the ASU after heat exchanging with compressed air within the ASU, but the temperature might not be so high all the way to the fuel mill. The hot nitrogen gas stream may e.g. have been cooled somewhat by expansion, e.g. in a turbine for energy recovery, before reaching the fuel mill. Conveniently, the nitrogen gas stream may still be of elevated temperature when reaching the fuel mill such that it may act to dry the fuel within the mill. Thus, the nitrogen gas stream, when entering the fuel mill, may have a temperature of at least 100°C, at least 120°C or least 140°C, e.g. between 100°C and 200°C, between 120°C and 180°C or between 140°C and 160°C, or about 150°C.

The hot nitrogen gas stream has a high purity of at least 98 mol-%, at least 99 mol-% or at least 99.5 mol-%. This high purity of the nitrogen gas stream increases its inertness and reduces the risk of ignition or dust explosion, or the like, of the fuel during milling, drying and/or transportation of the fuel before or after milling.

It may also be convenient with a high purity of the oxygen gas stream in order to improve the energy efficiency of the oxy-fuel combustion burner and reduce the flue gas volume. Thus, the oxygen gas stream may have a high purity of at least 90 mol-% oxygen, such as at least 95 mol-%, at least 98 mol-%, at least 99 mol-% or at least 99.5 mol-%.

The separating of air into a hot nitrogen gas stream and an oxygen gas stream may be performed in any suitable way, such as by comprising cryogenic distillation of the air. Cryogenic distillation may be convenient for the disclosed method since nitrogen and oxygen stream may be obtained with very high purity, such as of at least 95 mol-%, at least 98 mol-% or at least 99 mol-% nitrogen and oxygen, respectively.

The separating of air into a hot nitrogen gas stream and an oxygen gas stream may comprise compression of the air prior to separation. Conveniently, the compression might be at least partly adiabatic to obtain compressed air of a high temperature, such as of at least 150°C, at least 180°C, at least 200°C, at least 250°C or at least 300°C, e.g. of between 250°C and 350°C, between 280°C and 320°C or about 300°C. This hot compressed air may then be used to obtain the high temperature of the hot nitrogen gas stream by heat exchange. Thus, the compressed air may be chilled before separation, and the separated nitrogen stream may be heated. Compression may be performed in a single compression step, or by multistage compression.

Typically, multistage compression with intermittent cooling is used for compressing the air in an ASU. In most cases the heat is then removed by using cooling water. The removed heat may then leave the plant at about 40°C and will end up in the cooling tower, air cooler etc. In that case, the heat will be lost since it is not further utilized in the system or power plant. An advantage of intercooled compression is the lower required shaft power. It is thus surprising that a lower overall energy consumption may be obtained by using adiabatic compression, allowing heating of the nitrogen gas stream to a temperature such that it may be used for drying the fuel with less or no additional heating of the nitrogen gas stream and less or no additional drying of the fuel. In addition, the oxygen required for fuel combustion in the boiler may be preheated. This reduces the required demand of heating media, such as hot flue gas from fuel combustion, steam from water-steam-cycle, or hot boiler feed water from water-steam-cycle. Thus the overall energy consumption (fuel consumption) may be reduced. Also, using adiabatic air compression with waste heat utilization may save cooling water. In case of burning hard coal or sub bituminous coal the reduction of fuel moisture allows for reduction of the size of all flue gas ducts and may also reduce the amount of cooling water required for condensing and removing the water vapour of the flue gas.

Thus the overall heat balance as well the water balance of an Oxy-power plant is improved.

It should be noted that intercooled compression, or a combination of adiabatic and intercooled compression, may also be used with the method and system of the present disclosure as long as a nitrogen gas stream of sufficiently high temperature may be obtained. The compression may be configured such that the overall power consumption of the system or power plant is reduced or minimised.

All or only a part of the nitrogen gas stream produced by the ASU may be led to the fuel mill. If only a part is led to the mill, a second part may be led to an additional fuel dryer, complementing the drying performed in the fuel mill. Using an additional dryer may be especially convenient in case of burning fuels with a high moisture content (e.g. lignite). Devices and methods for drying fuels with high water content such as lignite are well known for conventional power plants. The heat demand of such conventional dryers as well the dimensions of the same may thus be reduced by integrating the dryer with the ASU (waste)heat in accordance with the present disclosure. The additional dryer may be arranged to dry the fuel before or after it is milled, but it may be convenient to additionally dry the fuel after milling since milled fuel may have a larger contact surface with the hot nitrogen gas stream than non-milled fuel, facilitating drying. Thus, the method of the present disclosure may also comprise: leading a second part of the hot nitrogen gas stream to a fuel dryer; drying the fuel by means of the fuel dryer, before or after the milling of said fuel; and leading the second part of the hot nitrogen gas stream away from the dried fuel. Similarly, one or more additional dryers may be used consecutively as needed, either using parts of the nitrogen gas stream or other drying medium for drying the fuel.

The nitrogen rich atmosphere of the fuel mill, and of any additional dryer, is formed by means of the nitrogen rich gas stream. However, the nitrogen rich gas stream might not only be formed by said nitrogen gas stream. According to the invention flue gas from downstream of the burner is recycled to the mill to help form a suitable inert and drying atmosphere for the mill. By combining the nitrogen gas stream with recycled flue gas to form the mill, and any additional dryer, atmosphere, heat from the burner and fuel combustion may be additionally used for drying the fuel and less of the hot nitrogen gas stream may be needed.

Similarly, the oxygen rich atmosphere at the burner may be formed by not only the oxygen gas stream from the ASU, but also by recycled flue gas.

Any suitable conduit, such as a pipe, possibly in cooperation with a fan, a compressor, an expander such as a turbine and/or other unit as convenient, may be used for leading the nitrogen gas stream from the ASU to the fuel mill, leading the nitrogen gas stream away from the fuel, e.g. away from the fuel mill or away from a conveyor transporting the fuel from the mill towards the burner, and leading the oxygen gas stream from the ASU to the burner. If a second part of the nitrogen gas stream is used for drying the fuel in an additional dryer, in addition to the mill, such a suitable conduit may also be used for leading said second part of the nitrogen gas stream from the ASU to the fuel dryer and for leading the second part of the nitrogen gas stream away from the fuel, e.g. away from the fuel dryer or away from a conveyor transporting the fuel from the dryer towards the burner.

Any suitable conveyor, such as a conveyor belt may be used to convey or transport the unmilled fuel to the fuel mill and/or the milled fuel from the fuel mill to the burner, possibly via an, or several, additional fuel dryer(s).

The system of the present disclosure may thus also comprise: a first conduit arranged for leading at least a part of the nitrogen gas stream to the fuel mill; a second conduit arranged for leading the at least a part of the nitrogen gas stream away from the milled fuel; a third conduit arranged for leading the oxygen gas stream to the oxy-fuel combustion burner; and a conveyor arranged for conveying the milled fuel to the oxy-fuel combustion burner.

The mill may be any suitable fuel mill for milling/pulverising the fuel and allowing a nitrogen gas stream to pass through it.

The additional dryer, if used, may be any suitable fuel dryer for drying the fuel and allowing a nitrogen gas stream to pass through it.

The burner may be any suitable oxy-fuel combustion burner.

In order to avoid fuel particles, e.g. milled fuel powder particles, following the nitrogen gas stream away from the fuel bulk during milling and drying of the fuel by means of the nitrogen gas stream, the conduit arranged to lead the nitrogen gas stream away from the fuel may be arranged with, or otherwise in cooperation with, a particle remover such as a an electrostatic precipitator, a cyclone, a filter and/or a scrubber. If an additional dryer is used, a particle remover may be in cooperation with the conduit arranged to lead the nitrogen gas stream away from the additionally dried fuel. Alternatively, a single particle remover may be used for both the nitrogen gas stream from the mill and the nitrogen gas stream from the additional dryer.

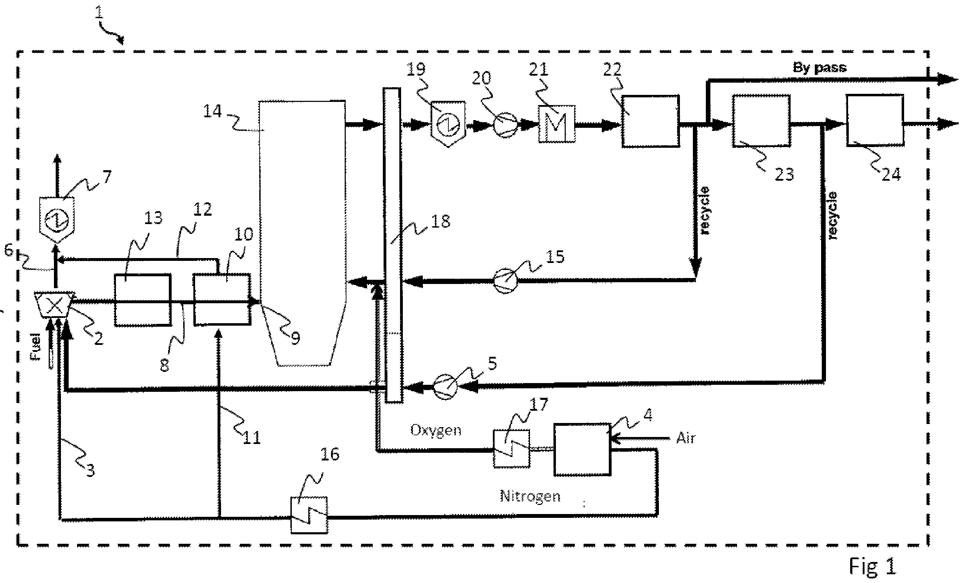

With reference to fig 1, a specific power plant 1 comprising a system in accordance with the present disclosure will now be described.

The power plant 1, as well as the system, comprises a fuel mill 2 arranged for milling/pulverising the power plant fuel, such as coal. The mill 2 is connected via a conduit or conveyer for entering fuel to be milled into the mill 2. The mill 2 is also connected via a conduit 3 to the air separation unit (ASU) 4 for allowing a nitrogen gas stream from the ASU 4 to enter the mill 2 via a gas inlet of the mill 2. Further, the mill 2 is arranged to receive recycled flue gas via a conduit and a gas inlet of the mill 2, the flue gas being recycled by means of a fan, compressor or turbine 5. A conduit 6 is arranged to connect the mill 2 and a particle remover in the form of an electrostatic precipitator (ESP) 7 such that the nitrogen gas stream and/or the recycled flue gas may exit the mill 2 via a gas outlet of the mill 2 and enter the ESP 7 via a gas inlet of the ESP 7. The ESP 7 is arranged to remove and return any fuel particles that has followed the nitrogen gas stream. A conveyor in the form of a conveyor belt 8 connects the mill 2 with an oxy-fuel combustion burner 9 such that milled fuel may be transported by means of the conveyor 8 from the mill 2 to the burner 9. The gas inlets and outlet of the mill 2 are arranged such that the nitrogen and flue gas gas streams passes through the mill 2 transversely to the direction in which the fuel is transported by means of the conveyor 8, thus reducing the amount of flue gas and, especially, nitrogen gas that reaches the burner 9. Thus the mill 2 may mill the fuel in an inert nitrogen and flue gas atmosphere that reduces the risk of fire or explosion in the mill 2, while the streaming hot gas also dries the fuel.

An additional fuel dryer 10 may also be used. The dryer 10 is similarly connected to the ASU 4 via a conduit 11 and to the ESP 7 via a conduit 12, allowing hot nitrogen gas to stream into the dryer 10 via a gas inlet, pass through the milled fuel transported by the conveyor 8 while drying said fuel and in a direction perpendicular of the transport direction of the fuel, and stream out of the dryer 10 via a gas outlet and the conduit 12 towards the ESP 7.

Additionally or alternatively to the dryer 10, a fuel dryer 13 using a drying medium other than the hot nitrogen gas stream may be used for drying the fuel.

The mill 2, as well as the conveyor 8 and dryers 10 and 13 may be operated at a pressure slightly above ambient in order to avoid in-leakage of air, and thus nitrogen, which would lessen the advantages with oxy-fuel combustion.

The oxy-fuel combustion burner 9 is arranged in or with the boiler 14 and is arranged to receive the dried and milled fuel via the conveyor 8. The burner 9 is configured to combust the fuel in an oxygen rich atmosphere provided by means of an oxygen rich gas stream from the ASU 4 arranged to enter the boiler 14 via a conduit connecting the boiler 14 with the ASU 4 and via a gas inlet of the boiler 14, possibly together with flue gas recycled by means of a fan, compressor or turbine 15. By allowing the burner 9 to operate with oxygen instead of air, the amount of flue gas is reduced since the inert nitrogen has been previously removed. The burning may be controlled by ratio of recycled flue gas to oxygen used. In the event of a failure of the ASU or if oxygen can otherwise not be provided to the burner 9, combustion with air may still be possible to ensure reliability of the plant 1.

The boiler 14 is arranged to produce steam from the heat produced by the burner 9, the steam being used for generation of electricity by means of turbines (not shown).

The ASU 4 is, as mentioned above, connected to the mill 2, the dryer 10 and the boiler 14 via gas conduits such that the hot nitrogen gas stream produced by the ASU 4 may pass through the mill 2 by means of conduits 3 and 6 and through the dryer 10 via conduits 11 and 12, and the oxygen gas stream produced by the ASU may enter the boiler 14 to be used for burning the fuel at the burner 9. If desired, the hot nitrogen gas stream from the ASU may be additionally heated by means of a heat exchanger 16 before entering the mill 2 and the dryer 10, respectively. It may be convenient to pre-heat the oxygen gas stream by means of a heat exchanger 17 before the stream enters the boiler 14.

A flue gas cleaning arrangement is connected to the boiler 14 to clean the flue gas produced by the oxy-fuel combustion. The flue gas may thus consecutively pass through several different cleaning units before any vent gas is released to the atmosphere. In the specific power plant of fig 1, the flue gas passes through a flue gas heat exchanger 18 arranged to cool the flue gas exiting the boiler 14 and to heat the flue gas recycled to the mill 2 and the boiler 14 as discussed above, an electrostatic precipitator 19 for removing particles from the flue gas, a flue gas compressor 20, a flue gas cooler 21, a wet flue gas desulphurisation unit 22, a flue gas condenser 23, and a gas processing unit 24 for removing carbon dioxide from the flue gas.

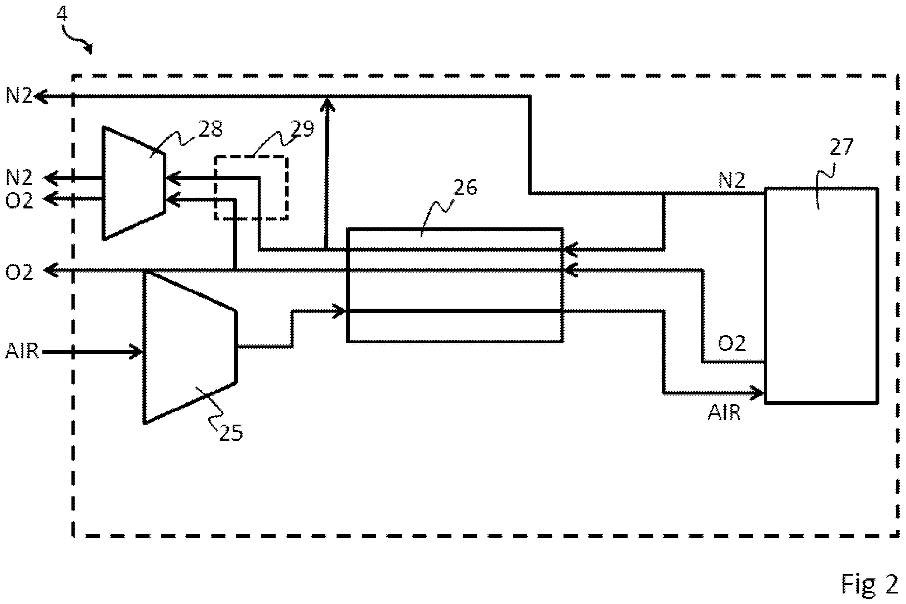

With reference to fig 2, a specific embodiment of an ASU 4 will now be described.

An adiabatic compressor 25 is configured to compress air of ambient temperature and pressure to a temperature of between 200°C and 300°C, such as 200°C and 250°C and a pressure of between 2-20 bar, such as 3-6 bar, e.g. about 5 bar. The compressor is arranged such that incoming air via a conduit may enter the compressor 25 via a gas inlet. The compressor 25 is connected to a heat exchanger 26 via a gas conduit such that compressed air may exit the compressor 25 via a gas outlet of the compressor 25 and the conduit to enter the heat exchanger 26 via gas inlet of the heat exchanger 26 to be chilled by said heat exchanger 26.

A cryogenic distillation unit 27 is in fluid connection with the heat exchanger 26 such that chilled compressed air, which may be at least partially liquefied, may enter the distillation unit 27 via a fluid conduit and a fluid inlet of the distillation unit 27. The distillation unit 27 may e.g. be a conventional distillation unit used in conventional cryogenic ASUs. The distillation unit 27 is arranged to cryogenically distil the compressed air such that the air is separated into at least one nitrogen fluid stream, which may be gas or liquid or a mixture thereof, with a purity of 99.5 mol-% and at least one oxygen fluid stream, which may be gas or liquid or a mixture thereof, and possibly an argon fluid stream and/or streams of other air constituents. Further, the distillation unit 27 is in fluid connection with the heat exchanger 26 such that the nitrogen and oxygen fluid streams may exit the distillation unit 27 via respective fluid outlets and pass into the heat exchanger 26 via respective conduits and fluid inlets of the heat exchanger 26.

An expander in the form of a turbine 28 is arranged to expand the at least one nitrogen stream and possibly also other of the separation products, while recovering energy from said expansion. The turbine 28 is in fluid connection with the heat exchanger 26 via conduits for the nitrogen stream and optionally the oxygen gas stream, respectively, such that the nitrogen and oxygen gas streams may exit the heat exchanger 26 via respective gas outlets of the heat exchanger 26, pass via respective conduits from the heat exchanger 26 to the turbine 28 and enter the turbine 28 via respective gas inlets. Typically, the expander 28 comprises separate turbines for the nitrogen and oxygen streams respectively. The expander 28 may be arranged for multistage expansion The expander 28 is arranged to expand the hot nitrogen gas stream from a temperature of about 250°C and a pressure of between 2-20 bar, such as 3-6 bar, e.g. about 5 bar, to a temperature of about 150°C and a pressure which is only slightly above ambient. After expansion by means of the expander 28, the oxygen gas stream may be directed to the boiler 14 and the nitrogen gas stream may be directed to the mill 2 and possibly the dryer 10, as discussed above in respect of fig 1.

As is shown in fig 2, at least a part of the nitrogen gas stream from the distiller 27 may additionally or alternatively bypass the heat exchanger 26 and/the expander 28, e.g. to be directly led to the mill 2 and/or the dryer 10, possibly via the optional pre-heating heat exchanger 16 of fig 1.

It may be convenient to also expand the oxygen stream in an expander, e.g. expander 28, for instance to recover energy. The oxygen stream may thereafter be directed to the boiler 14 and the burner 9. It may be convenient, especially if the oxygen stream has been expanded, to pre-heat the oxygen stream before entering the boiler 14, e.g. by means of heat exchange with steam. As is shown in fig 2, the oxygen stream may either be expanded in the expander 28 or bypass the expander 28, e.g. being led directly to the boiler 14, or part of the oxygen stream may pass through the expander 28 while another part bypasses expander 28.

Optionally, a heat exchanger 29 may be used to pre-heat the nitrogen gas stream, and optionally the oxygen gas stream, prior to expansion by means of the expander 28. The heat exchanger 29 may as heating medium e.g. use hot flue gas from the boiler 14, steam from the water/steam cycle of the power plant 1 and/or boiler feed water from the water/steam cycle of the power plant 1.

The heat exchanger 26 is in fluid connection with the compressor 25, the distillation unit 27 and the expander 28, as discussed above. The heat exchanger 26 is arranged to cool the compressed air by means of heat exchanging with the distillation products, i.e. the nitrogen and oxygen gas streams. An additional cooling medium in addition to the nitrogen and oxygen gas streams may also be needed. The heat exchanger 26 may thus be arranged to cool the compressed air from a temperature of between 200°C-250°C and a pressure of between 2-20 bar, such as 3-6 bar, e.g. about 5 bar, to a temperature of between 50°C to 100°C and a pressure of between 2-20 bar, such as 3-6 bar, e.g. about 5 bar, to heat the nitrogen gas stream from a temperature of between 0°C to 30°C, such as about 10°C and a pressure of between 2-20 bar, such as 3-6 bar, e.g. about 5 bar, to a temperature of between 150°C-250°C and a pressure of between 2-20 bar, such as 3-6 bar, e.g. about 5 bar, and to heat the oxygen gas stream from a temperature of between 0°C-30°C, such as about 10°C, and a pressure of between 1-20 bar, such as 1-3 bar, e.g. about 1.2 bar to a temperature of between 150°C-250°C and a pressure of between 1-3 bar, e.g. about 1.2 bar.

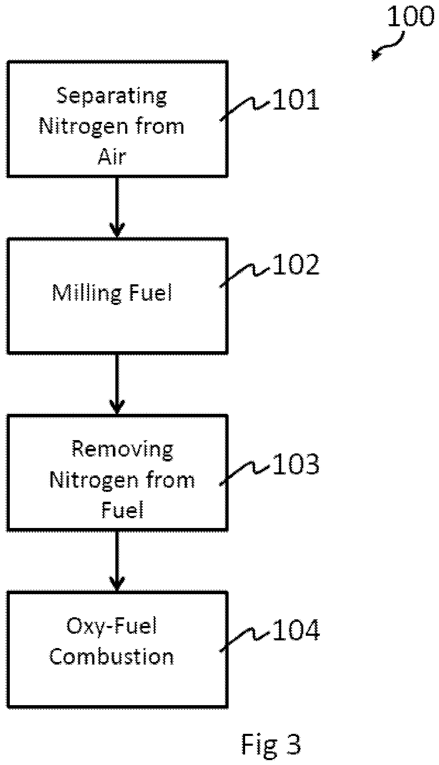

With reference to fig 3, a specific embodiment 100 of a method in accordance with the present disclosure will now be described.

By means of the ASU 4, air is separated, step 101, into a hot nitrogen gas stream and an oxygen gas stream. The hot nitrogen gas stream is led to the fuel mill 2 and the oxygen gas stream is led to the oxy-fuel combustion burner 9.

In the fuel mill 2, fuel such as coal is milled, step 102, under a nitrogen rich atmosphere formed by means of the hot nitrogen gas stream from the ASU 4. The nitrogen gas stream is allowed to flow through the mill 2 such that at least most of the nitrogen gas is removed, step 103, from the fuel and does not follow the fuel to the burner 9.

The milled fuel is transported by means of the conveyor 8 to the burner 9 where it is oxy-fuel combusted, step 104, under an oxygen rich atmosphere formed by means of the oxygen gas stream from the ASU 4.

While the invention has been described with reference to a number of preferred embodiments, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiments disclosed as the best mode currently contemplated for carrying out this invention, but that the invention will include all embodiments falling within the scope of the appended claims. Moreover, the use of the terms first, second, etc. do not denote any order or importance or chronology, but rather the terms first, second, etc. are used to distinguish one element from another.

## Claims

1. A method of milling a fuel for an oxy-fuel combustion burner (9), the method comprising:
separating (101) air into a hot nitrogen gas stream, having a temperature of at least 150°C and a purity of at least 98 mol-% nitrogen, and an oxygen gas stream;
leading at least a part of the nitrogen gas stream to a fuel mill (2) for drying the fuel within the mill (2);
milling (102) the fuel by means of the fuel mill (2) in a nitrogen rich atmosphere formed by means of the nitrogen gas stream;
leading the oxygen gas stream to the oxy-fuel combustion burner (9); conveying the milled fuel to the oxy-fuel combustion burner (9); and
burning (104) the fuel to form a flue gas, by means of the oxy-fuel combustion burner (9), in an oxygen rich atmosphere formed by means of the oxygen gas stream,
combining the nitrogen gas stream with recycled flue gas from downstream of the burner to form the mill, and optionally an additional dryer atmosphere, such that heat from the burner (9) and fuel combustion is used for drying the fuel; and leading (103) the at least a part of the nitrogen gas stream and the recycled flue gas away from the milled fuel.

2. The method of claim 1, wherein the air separating comprises cryogenic distillation.

3. The method of claim 1 or 2, wherein the air separating comprises adiabatic compression of air to form an air stream having a temperature of at least 150°C.

4. The method of any previous claim, wherein the leading away of the hot nitrogen gas stream comprises removing any fuel particles from the hot nitrogen gas stream by means of a particle remover (7), such as an electrostatic precipitator or a cyclone.

5. The method of any previous claim, further comprising:
combining a second part of the hot nitrogen gas stream with recycled flue gas from downstream of the burner,
leading a second part of the hot nitrogen gas stream and the recycled flue gas to a fuel dryer (10) to form an additional dryer atmosphere^{v};
drying the fuel by means of the fuel dryer (10), before or after the milling (102) of said fuel; and
leading the second part of the hot nitrogen gas stream and the recycled flue gas away from the dried fuel (10).

6. A system comprising:
an air separation unit (4) arranged for separating (101) air into a hot nitrogen gas stream having a temperature of at least 150°C and a purity of at least 98 mol-% nitrogen, and an oxygen gas stream;
a fuel mill (2) and a conduit for leading at least a part of the nitrogen gas stream to the fuel mill for drying the fuel within the mill (2), wherein the fuel mill being arranged for milling (102) a fuel in a nitrogen rich atmosphere formed by means of the nitrogen gas stream; and
an oxy-fuel combustion burner (9), arranged for burning (104) the milled fuel to form a flue gas in an oxygen rich atmosphere formed by means of the oxygen gas stream,
the fuel mill (2) being arranged to receive recycled flue gas from downstream of the burner via a conduit and a gas inlet, and
a first conduit (103) for leading the at least part of the nitrogen gas stream and the recycled flue gas away from the milled fuel.

7. The system of claim 6, wherein the air separation unit (4) comprises a cryogenic distillation unit (27).

8. The system of claim 6 or 7, wherein the air separation unit (4) comprises an adiabatic compressor (25) arranged for compressing air to form an air stream having a temperature of at least 150°C.

9. An oxy-fuel combustion power plant comprising the system of any claim 6-8.

## Patentansprüche

1. Verfahren zum Mahlen eines Brennstoffes für einen Brenner (9) zur Sauerstoff-Gas-Verbrennung, wobei das Verfahren umfasst:
Trennen (101) von Luft in einen heißen Stickstoffgasstrom, aufweisend eine Temperatur von mindestens 150 °C und einer Reinheit von mindestens 98 Mol-% Stickstoff und einen Sauerstoffgasstrom;
Leiten mindestens eines Teils des Stickstoffgasstroms zu einer Brennstoffmühle (2) zum Trocknen des Brennstoffs innerhalb der Mühle (2);
Mahlen (102) des Brennstoffs mittels der Brennstoffmühle (2) in einer stickstoffreichen Atmosphäre, die durch den Stickstoffgasstrom gebildet wird;
Leiten des Sauerstoffgasstroms zu dem Brenner (9) zur Sauerstoff-Gas-Verbrennung;
Befördern des gemahlenen Brennstoffs zum Brenner (9) zur Sauerstoff-Gas-Verbrennung; und
Verbrennen (104) des Brennstoffs zum Bilden eines Rauchgases mittels des Brenners (9) zur Sauerstoff-Gas-Verbrennung in einer sauerstoffreichen Atmosphäre, die mittels des Sauerstoffgasstroms gebildet wird,
Vermischen des Stickstoffgasstroms mit rückgeführtem Rauchgas stromabwärts des Brenners zu der Mühle, und gegebenenfalls eine zusätzliche Trockneratmosphäre, so dass Wärme aus dem Brenner (9) und der Brennstoffverbrennung zum Trocknen des Brennstoffs verwendet wird; und
Wegleiten (103) des mindestens einen Teils des Stickstoffgasstroms und des rückgeführten Rauchgases von dem gemahlenen Brennstoff.

2. Verfahren nach Anspruch 1, wobei das Trennen der Luft eine Tieftemperaturdestillation umfasst.

3. Verfahren nach Anspruch 1 oder 2, wobei das Trennen der Luft eine adiabatische Kompression von Luft umfasst, um einen Luftstrom mit einer Temperatur von mindestens 150 °C zu bilden.

4. Verfahren nach einem der vorstehenden Ansprüche, wobei das Wegleiten des heißen Stickstoffgasstroms das Entfernen von Brennstoffpartikeln aus dem heißen Stickstoffgasstrom mittels eines Partikelentweiters (7), wie eines elektrostatischen Abscheiders oder eines Zyklons, umfasst.

5. Verfahren nach einem der vorstehenden Ansprüche, weiterhin umfassend:
Vermischen eines zweiten Teils des heißen Stickstoffgasstroms mit rückgeführtem Rauchgas stromabwärts des Brenners,
Leiten eines zweiten Teils des heißen Stickstoffgasstroms und des rückgeführten Rauchgases zu einem Brennstofftrockner (10), um eine zusätzliche Trockneratmosphäre zu bilden;
Trocknen des Brennstoffs mittels des Brennstofftrockners (10) vor oder nach dem Mahlen (102) des Brennstoffs; und
Wegleiten des zweiten Teils des heißen Stickstoffgasstroms und des rückgeführten Rauchgases von dem getrockneten Brennstoff (10).

6. System, umfassend:
eine Lufttrennungseinheit (4), die angeordnet ist, um Luft in einen heißen Stickstoffgasstrom, aufweisend eine Temperatur von mindestens 150 °C und einer Reinheit von mindestens 98 Mol-% Stickstoff und einen Sauerstoffgasstrom zu trennen (101);
eine Brennstoffmühle (2) und eine Leitung zum Leiten mindestens eines Teil des Stickstoffgasstroms zu der Brennstoffmühle zum Trocknen des Brennstoffs innerhalb der Mühle (2), wobei die Brennstoffmühle zum Mahlen (102) eines Brennstoffs in einer stickstoffreichen Atmosphäre angeordnet ist, die mittels des Stickstoffgasstroms gebildet wird; und
einen Brenner (9) zur Sauerstoff-Gas-Verbrennung, der zum Verbrennen (104) des gemahlenen Kraftstoffs zum Bilden eines Rauchgases in einer sauerstoffreichen Atmosphäre, die mittels des Sauerstoffgasstroms gebildet wird, angeordnet ist;
wobei die Brennstoffmühle (2) angeordnet ist, um rückgeführtes Rauchgas über eine Leitung und einen Gaseinlass stromabwärts des Brenners aufzunehmen, und
eine erste Leitung (103) zum Wegleiten des mindestens einen Teils des Stickstoffgasstroms und des rückgeführten Rauchgases von dem gemahlenen Brennstoff.

7. System nach Anspruch 6, wobei die Lufttrennungseinheit (4) eine Tieftemperaturdestillationseinheit (27) umfasst.

8. System nach Anspruch 6 oder 7, wobei die Lufttrennungseinheit (4) einen adiabatischen Kompressor (25) umfasst, der zum Druckbeaufschlagen von Luft zum Bilden eines Luftstroms mit einer Temperatur von mindestens 150 °C angeordnet ist.

9. Kraftwerk zur Sauerstoff-Gas-Verbrennung, umfassend das System nach einem der Ansprüche 6 bis 8.

## Revendications

1. Procédé de broyage d'un combustible destiné à un brûleur à oxycombustion (9), le procédé comprenant :
la séparation (101) de l'air en un courant d'azote gazeux chaud, ayant une température d'au moins 150 °C et une pureté d'au moins 98 % en moles d'azote, et un courant d'oxygène gazeux ;
l'acheminement d'au moins une partie du courant d'azote gazeux jusqu'à un broyeur à combustible (2) pour sécher le combustible dans le broyeur (2) ;
le broyage (102) du combustible au moyen du broyeur à combustible (2) dans une atmosphère riche en azote formée au moyen du courant d'azote gazeux ;
l'acheminement du courant d'oxygène gazeux jusqu'au brûleur à oxycombustion (9) ;
le transport du combustible broyé jusqu'au brûleur à oxycombustion (9) ; et
le brûlage (104) du combustible pour former un gaz de combustion, au moyen du brûleur à oxycombustion (9), dans une atmosphère riche en oxygène formée au moyen du courant d'oxygène gazeux,
le mélange du courant d'azote gazeux avec un gaz de combustion recyclé provenant de l'aval du brûleur jusqu'au broyeur, et éventuellement une atmosphère de séchage supplémentaire, de sorte que la chaleur issue du brûleur (9) et de la combustion du combustible soit utilisée pour sécher le combustible ; et
l'éloignement (103) de l'au moins une partie du courant d'azote gazeux et du gaz de combustion recyclé, du combustible broyé.

2. Procédé selon la revendication 1, dans lequel la séparation de l'air comprend une distillation cryogénique.

3. Procédé selon les revendications 1 ou 2, dans lequel la séparation de l'air comprend une compression adiabatique de l'air pour former un courant d'air ayant une température d'au moins 150 °C.

4. Procédé selon une quelconque revendication précédente, dans lequel l'éloignement du courant d'azote gazeux chaud comprend l'élimination d'éventuelles particules de combustible du courant d'azote gazeux chaud au moyen d'un dispositif d'élimination de particules (7) tel qu'un précipitateur électrostatique ou un cyclone.

5. Procédé selon une quelconque revendication précédente, comprenant en outre :
le mélange d'une seconde partie du courant d'azote gazeux chaud avec un gaz de combustion recyclé provenant de l'aval du brûleur,
l'acheminement d'une seconde partie du courant d'azote gazeux chaud et du gaz de combustion recyclé jusqu'à un séchoir à combustible (10) pour former une atmosphère de séchage supplémentaire ;
le séchage du combustible au moyen du séchoir à combustible (10), avant ou après le broyage (102) dudit combustible ; et
l'éloignement de la seconde partie du courant d'azote gazeux chaud et du gaz de combustion recyclé, du combustible séché (10).

6. Système comprenant :
une unité de séparation d'air (4) agencée de manière à séparer l'air (101) en un courant d'azote gazeux chaud ayant une température d'au moins 150 °C et une pureté d'au moins 98 % en moles d'azote, et un courant d'oxygène gazeux ;
un broyeur à combustible (2) et un conduit permettant d'acheminer au moins une partie du courant d'azote gazeux jusqu'au broyeur à combustible pour sécher le combustible dans le broyeur (2), le broyeur à combustible étant agencé de manière à broyer (102) un combustible dans une atmosphère riche en azote formée au moyen du courant d'azote gazeux ; et
un brûleur à oxycombustion (9), agencé de manière à brûler (104) le combustible broyé pour former un gaz de combustion dans une atmosphère riche en oxygène formée au moyen du courant d'oxygène gazeux,
le broyeur à combustible (2) étant agencé de manière à recevoir un gaz de combustion recyclé provenant de l'aval du brûleur par l'intermédiaire d'un conduit et d'une entrée de gaz, et
un premier conduit (103) pour éloigner l'au moins une partie du courant d'azote gazeux et le gaz de combustion recyclé, du combustible broyé.

7. Système selon la revendication 6, dans lequel l'unité de séparation de l'air (4) comprend une unité de distillation cryogénique (27).

8. Système selon les revendications 6 ou 7, dans lequel l'unité de séparation de l'air (4) comprend un compresseur adiabatique (25) agencé de manière à comprimer l'air pour former un courant d'air ayant une température d'au moins 150 °C.

9. Centrale électrique à oxycombustion comprenant le système selon l'une quelconque des revendications 6 à 8.
